# EUROPÄISCHE PATENTANMELDUNG

(11) **EP 3 643 476 A1**
(43) Veröffentlichungstag der Anmeldung: **29.04.2020**
(21) Anmeldenummer: 18202797.9
(22) Anmeldetag: 26.10.2018
(51) Int. Cl.: B29C 64/135, B29C 64/393

(54) **BETRIEBSVERFAHREN FÜR EINE FERTIGUNGSMASCHINE, FERTIGUNGSMASCHINE UND COMPUTERPROGRAMMPRODUKT**

(71) Anmelder: Siemens Aktiengesellschaft, 80333 München (DE)
(72) Erfinder: Jähnicke, Jens, 09112 Chemnitz (DE)

(57) **Zusammenfassung**

Die Erfindung betrifft ein Betriebsverfahren für eine Fertigungsmaschine sowie eine Fertigungsmaschine, insbesondere einen 3D-Drucker. Während des Betriebsverfahrens erfolgt vorzugsweise ein Erwärmen eines Bereiches (2) der Oberfläche (1) vor dem Auftragen eines Werkstoffes (1a). Das Erwärmen der Oberfläche (1) erfolgt mit Hilfe einer Strahlenquelle (5). Zur Bestimmung der Temperatur (T) der Oberfläche (1) dient ein Temperatursensor (9). Der Temperatursensor (9) stellt die Temperatur (T) an eine Temperatur-Regeleinrichtung (RE1) bereit, wobei die Temperatur-Regeleinrichtung (RE1) die Leistung (P) der Strahlenquelle (5) und damit die Temperatur (T) regelt. Vorzugsweise wird der Bereich (2) lokal zum Schmelzen gebracht, so dass der Werkstoff (1a) sich besser mit der Oberfläche (1) verbindet.

## Beschreibung

Die Erfindung betrifft ein Betriebsverfahren für eine Fertigungsmaschine und eine Fertigungsmaschine. Darüber hinaus betrifft die Erfindung ein Computerprogrammprodukt.

Fertigungsmaschinen sind beispielhaft Werkzeugmaschinen, wie eine CNC-Maschine, eine Fräsmaschine, eine Drehmaschine. Moderne Fertigungsmaschinen sind 3D-Drucker.

3D-Drucker dienen insbesondere zum Auftragen eines Werkstoffes auf eine Oberfläche. Der Werkstoff wird in der Regel in geschmolzener Form auf die Oberfläche aufgebracht. Die Oberfläche kann eine Grundfläche, auf der ein Werkstück entstehen soll, oder eine Oberfläche des Werkstückes sein.

In der Regel wird der Werkstoff in geschmolzener Form aus einem Druckkopf auf die Oberfläche aufgebracht. Hierbei wird der Druckkopf von der Oberfläche beanstandet über die Oberfläche bewegt und der Werkstoff in Form eines Stranges auf die Oberfläche aufgebracht. Nach dem Erstarren des Werkstoffes geht der Werkstoff eine feste Verbindung zur Oberfläche ein.

Nachteilhaft bei heutigen 3D-Druckverfahren ist, dass die Festigkeit des entstehenden Werkstückes in unterschiedlichen Raumrichtungen verschieden ist.

Eine Beachtung der Temperatur einer Oberfläche wird beispielsweise in US 10,037,022 B1 behandelt.

Daher ist es Aufgabe der Erfindung, eine Fertigungsmaschine bereitzustellen, bei der das entstehende Werkstück eine gleichmäßige und hohe Festigkeit aufweist.

Die Aufgabe wird mit einem Betriebsverfahren für eine Fertigungsmaschine gemäß Anspruch 1 und durch eine Fertigungsmaschine nach Anspruch 8 gelöst.

Darüber hinaus wird die Aufgabe durch ein Computerprogrammprodukt gemäß Anspruch 12 gelöst.

Weitere vorteilhafte Ausführungen und Weiterentwicklungen der Erfindungen sind Gegenstand der abhängigen Ansprüche.

Der Erfindung liegt die Erkenntnis zu Grunde, dass ein geschmolzener Werkstoff sich mit einer festen Oberfläche nur schlecht verbindet. Ist die Oberfläche in dem Bereich, in dem der Werkstoff aufgetragen wird, flüssig, so ist die Verbindung erheblich verbessert.

Problematisch ist allerdings ein gleichmäßiges Erwärmen der Oberfläche oder eines Werkstückes. Durch ein Schmelzen des Werkstückes kann sich die Form des Werkstückes verändern. Demnach wird vorteilhaft lediglich derjenige Bereich der Oberfläche erwärmt, auf den der Werkstoff nachfolgend aufgetragen wird. Das Auftragen des Werkstoffes erfolgt durch den Druckkopf. Während des Betriebsverfahrens wird der Druckkopf, vorzugsweise mit einer Geschwindigkeit, relativ zur Oberfläche bewegt. Die Bahn, auf welcher der Werkstoff aufgetragen wird, ist vorzugsweise vorgegeben.

Das Erwärmen des Bereiches erfolgt vorzugsweise mit Hilfe einer Strahlenquelle. Die Strahlenquelle stellt vorzugsweise eine elektromagnetische Strahlung bereit, die vorteilhaft auf den Bereich fokussiert wird. Die Strahlenquelle kann ein Laser, insbesondere ein Festkörperlaser, eine Mikrowellenquelle oder eine sonstige Strahlenquelle sein.

Die Strahlenquelle ist vorzugsweise mit Hilfe einer optischen Apparatur auf den Bereich fokussierbar. Vorzugsweise ist die Strahlenquelle selbst mit dem Druckkopf verbunden.

Zur Bewegung des Druckkopfes über die Oberfläche können der Druckkopf, das Werkstück und/oder die Oberfläche bewegt und/oder ausgerichtet werden.

Um die Oberfläche oder das Werkstück nicht zu beschädigen erfolgt vorzugsweise eine Regelung des Erwärmens. Die Regelung des Erwärmens der Oberfläche erfolgt vorzugsweise durch eine Regelung der Leistung der Strahlenquelle.

Für das Betriebsverfahren für eine Fertigungsmaschine, insbesondere für einen 3D-Drucker, umfasst die Fertigungsmaschine einen Druckkopf, eine Strahlenquelle, insbesondere als Laser ausgebildet, einen Temperatursensor und eine Temperatur-Regeleinrichtung. Das Betriebsverfahren umfasst die folgenden Schritte:
- Bewegung des Druckkopfes entlang einer vorgebbaren Bahn (B) oberhalb einer Oberfläche;
- Auftragen des Werkstoffes auf die Oberfläche in den Bereich mit Hilfe des Druckkopfes;
- geregeltes Erwärmen eines Bereiches mit Hilfe der Strahlenquelle auf die Auftragungstemperatur, wobei der jeweilige Bereich entlang der Bahn angeordnet ist;
- Bestimmung der Temperatur der Oberfläche mit Hilfe des Temperatursensors, wobei der Temperatursensor die Temperatur der Oberfläche des Bereiches an die Temperatur-Regeleinrichtung bereitstellt;
- Regelung der Leistung der Strahlenquelle mit Hilfe der Temperatur-Regeleinrichtung derart, dass die Oberfläche in dem Bereich vor einem Aufbringen des Werkstoffes auf die Auftragungstemperatur mittels der Strahlenquelle erwärmt wird.

Der Druckkopf ist vorteilhaft entsprechend einem Extruder ausgeführt. Der Druckkopf weist vorzugsweise an seiner Unterseite einen Auslass für den Werkstoff auf, wobei der Druckkopf den Werkstoff in flüssiger Form auf die Oberfläche aufbringt.

Der Bereich ist auf der Oberfläche vorzugsweise dort positioniert, wo der Werkstoff als nächstes aufgebracht wird. Der Bereich bewegt sich somit vorzugsweise dem Auslass des Druckkopfes vorweg. Vorteilhaft bewegt sich der Bereich entlang der Bahn in einem konstanten Abstand von dem Auslass des Druckkopfes.

Das Merkmal, dass der Bereich auf der Bahn für den Druckkopf angeordnet ist, dient vorteilhaft dazu, dass die Oberfläche lediglich in dem Bereich auf die Auftragungstemperatur erwärmt werden muss.

Der Bereich ist vorzugweise von der gleichen Größenordnung wie der Durchmesser des Auslasses. Vorteilhaft ist der Bereich rund ausgeführt, so dass der Bereich mit Hilfe der Strahlenquelle vollständig erwärmt werden kann.

Unter einer Auftragungstemperatur wird eine Temperatur verstanden, bei der die Oberfläche, insbesondere die Oberfläche des Werkstückes, gerade geschmolzen ist. Alternativ kann die Auftragungstemperatur so gewählt werden, so dass die Adhäsionskraft zwischen der Oberfläche und dem aufgetragenen Werkstoff ein Minimum aufweist oder besonders niedrig ist.

Der Druckkopf wird vorzugsweise mit einer weitgehend konstanten Geschwindigkeit entlang der Bahn bewegt, wobei Richtungswechsel durch die Änderung der Ausrichtung der Oberfläche ausgeführt werden können.

Die Temperatur wird vorzugsweise mit Hilfe eines berührungslosen Temperatursensors ermittelt. Vorzugsweise wird die Temperatur der Oberfläche in dem Bereich bestimmt. Die Temperatur wird vorzugsweise als Ist-Wert der Temperatur-Regeleinrichtung bereitgestellt.

Die Temperatur-Regeleinrichtung dient zur Regelung der Temperatur derart, dass die Oberfläche in dem Bereich vorteilhaft etwas höher als die Schmelztemperatur des Werkstoffes erwärmt wird. Das Erwärmen erfolgt vorzugsweise mit Hilfe der Strahlenquelle, wobei die Strahlenquelle auf den Bereich fokussiert ausgerichtet wird. Ein von der Strahlenquelle ausgehender Strahl dient zum Erwärmen der Oberfläche in dem Bereich. Der Strahl wird vorteilhaft zumindest teilweise von der Oberfläche absorbiert. Die Absorption des Strahls erwärmt die Oberfläche. Demnach erfolgt vorteilhaft eine Regelung der Temperatur durch eine Regelung der Leistung der Strahlenquelle.

Vorzugsweise wird die Temperatur derart geregelt, dass die Oberfläche in dem Bereich eine Auftragungstemperatur aufweist. Die Auftragungstemperatur wird vorteilhaft etwas höher als die Schmelztemperatur des Werkstoffes gewählt.

Vorzugsweise wird die Temperatur derart geregelt, dass der Bereich vor einem wiederholten Auftragen des Werkstoffes wieder soweit abgekühlt ist.

Vorzugsweise ist die Temperatur-Regeleinrichtung derart eingerichtet, dass lediglich der Bereich der Oberfläche die Auftragungstemperatur aufweist.

Bei einer vorteilhaften Ausgestaltung der Erfindung werden die Strahlenquelle, die Oberfläche und/oder der Druckkopf derart relativ zueinander ausgerichtet, so dass die Strahlenquelle während des Erwärmens der Oberfläche auf den Bereich gerichtet wird.

Die Ausrichtung der Strahlenquelle erfolgt vorzugsweise derart, dass mit der Strahlenquelle der Bereich bestrahlt wird. Der Bereich wird vorzugsweise während und/oder nach der Bestrahlung mit dem Werkstoff beaufschlagt. Da die Bahn in der Regel bereichsweise gekrümmt ist, erfolgt eine Ausrichtung der Oberfläche in Bezug zu dem Druckkopf vorzugsweise so, dass Richtungsänderungen des Druckkopfes vermieden werden. Vorzugsweise ist demnach auch die Strahlenquelle so auszurichten, dass während des Betriebes der Fertigungsmaschine der Bereich bestrahlt werden kann.

Durch eine koordinierte Bewegung der Oberfläche, des Druckkopfes und/oder der Strahlenquelle kann eine geringe Bewegung der Strahlenquelle erfolgen.

Demnach wird die Strahlenquelle durch die Bewegung nicht belastet und somit die Lebensdauer der Strahlenquelle erhöht.

Bei einer weiteren vorteilhaften Ausgestaltung der Erfindung wird die Bearbeitungsmaschine mit Hilfe eines G-Codes gesteuert, wobei der G-Code eine Geschwindigkeit des Druckkopfes relativ zur Oberfläche, die Temperatur und/oder die Bahn umfasst.

Ein G-Code ist vorzugsweise ein Maschinen-lesbarer Code. Mit Hilfe des G-Codes kann eine hier beschriebene Fertigungsmaschine besonders einfach gesteuert werden. Überdies kann ein G-Code mit handelsüblichen Computerprogrammen erstellt und/oder bearbeitet werden.

Vorzugsweise umfasst der G-Code die Ausrichtung der Strahlungsquelle und/oder einen Sollwert für die Leistung der Strahlungsquelle. Bei einer gepulsten Strahlungsquelle kann eine Puls-Wiederholungsrate, insbesondere als Funktion der Zeit, der Position des Druckkopfes und/oder der Ausrichtung der Strahlungsquelle, in den G-Code aufgenommen sein.

Vorteilhaft umfasst der G-Code auch die Position und/oder Ausrichtung der Strahlenquelle am Druckkopf, falls die Strahlungsquelle an dem Druckkopf beweglich angebracht ist.

Durch die Aufnahme der Ausrichtung der Strahlungsquelle in den G-Code kann sichergestellt werden, dass die Strahlungsquelle fortwährend den Bereich erwärmt.

Vorzugsweise kann auch ein bereits vorhandener G-Gode mit Temperaturen und/oder Leistungswerten für die Strahlenquelle erweitert werden.

Bei einer weiteren vorteilhaften Ausgestaltung der Erfindung regelt die Temperatur-Regeleinrichtung die Leistung der Strahlenquelle derart, dass die Temperatur der Oberfläche eine Maximaltemperatur nicht überschreitet.

Bei Überschreiten einer Maximaltemperatur könnte der Werkstoff und/oder die Oberfläche in ihren Eigenschaften durch eine chemische Reaktion verändert werden.

Darüber hinaus könnten die Oberfläche und/oder der Werkstoff Bläschen bilden.

Die Maximaltemperatur ist vorzugsweise in der Temperatur-Regeleinrichtung hinterlegt.

Um eine Beeinträchtigung der Oberfläche und/oder des Werkstoffes zu verhindern, erfolgt die Regelung der Leistung der Strahlenquelle derart, dass die Maximaltemperatur nicht überschritten wird.

Durch die Maximaltemperatur kann eine Beschädigung der Oberfläche oder des Werkstückes ausgeschlossen werden.

Bei einer weiteren vorteilhaften Ausgestaltung der Erfindung umfasst die Bearbeitungsmaschine eine Geschwindigkeits-Regeleinrichtung und die Geschwindigkeit des Druckkopfes wird mit Hilfe der Geschwindigkeits-Regeleinrichtung derart geregelt, dass die Oberfläche in dem Bereich bei einem wiederholten Auftragen des Werkstoffes wieder unterhalb der Schmelztemperatur abgekühlt ist.

Die Geschwindigkeits-Regeleinrichtung und die Temperatur-Regeleinrichtung sind vorzugsweise miteinander wirkverbunden. Vorzugsweise wird die Geschwindigkeit des Druckkopfes so eingestellt, dass eine möglichst kurze Zeit für die Fertigung des Werkstückes erforderlich ist.

Demgegenüber sollte die Oberfläche wieder soweit abgekühlt sein, so dass der Werkstoff erstarrt ist. Vorzugsweise kann dann mit Hilfe der Strahlenquelle die Oberfläche wieder lediglich in dem Bereich erwärmt werden.

Durch die Regelung der Geschwindigkeit wird vorteilhaft ein Absacken des Werkstoffes auf einer bereichsweise flüssig vorliegenden Oberfläche verhindert.

Bei einer weiteren vorteilhaften Ausgestaltung der Erfindung wobei anhand einer Simulation eines Abkühlvorgangs der Oberfläche eine minimale Zeit bereitgestellt wird, wobei der Werkstoff in Schichten aufgetragen wird, wobei anhand der minimalen Zeit eine maximale Geschwindigkeit für den Druckkopf bereitgestellt wird, so dass ein wiederholtes Erwärmen des Bereiches lediglich bis zu einer Tiefe einer Schicht des Werkstoffes, insbesondere 100 Mikrometer, über die Auftragungstemperatur erfolgt.

Vorzugsweise erfolgt das Auftragen des Werkstoffes auf die Oberfläche in Schichten, wobei die Schichten übereinander angeordnet sind. Durch das Auftragen des Werkstoffes in Schichten ändert sich der Abstand (in Lot-Richtung) zwischen der Strahlenquelle und der Oberfläche nur nach dem Auftragen einer neuen Schicht. Die aufgetragene Schicht bildet die eine neue Oberfläche.

Vorteilhaft erfolgt ein Erwärmen der Oberfläche derart, dass nur eine sehr dünne Schicht der Oberfläche in dem Bereich als flüssiger Werkstoff vorliegt.

Mit Hilfe der Simulation des Abkühlvorgangs kann festgestellt werden, wie schnell die Oberfläche wieder eine Temperatur unterhalb der Auftragungstemperatur annimmt. Je nach Form des Werkstückes und der Eigenschaften des Werkstoffes kann somit die Messung der Temperatur unterstützt werden. Fehlerhafte Messwerte der Temperatur der Oberfläche in dem Bereich können so vermieden werden.

So kann Energie eingespart werden. Überdies kühlt die Oberfläche schneller ab und mit Hilfe der Geschwindigkeits-Regeleinrichtung kann der Druckkopf auf eine höhere Geschwindigkeit geregelt werden.

Bei einer weiteren vorteilhaften Ausgestaltung der Erfindung werden die Oberfläche, die Strahlenquelle und/oder der Druckkopf so gedreht, dass die Strahlenquelle den Bereich jeweils vor dem Auftragen des Werkstoffs erwärmen kann.

Es ist vorteilhaft, dass die Strahlenquelle während des hier beschriebenen Verfahrens auf den Bereich ausgerichtet ist. Darüber hinaus sollte verhindert werden, dass der Druckkopf zwischen dem Bereich und der Strahlenquelle positioniert ist.

Hierzu können die Oberfläche oder das Werkstück jeweils zueinander ausgerichtet werden, so dass die Strahlenquelle auf den Bereich ausgerichtet werden kann, ohne dass der Druckkopf den Strahl unterbricht.

Vorteilhaft kann auch die Strahlenquelle so positioniert und/oder ausgerichtet werden, dass der Strahl, der von der Strahlenquelle ausgeht, auf den Bereich gerichtet werden kann.

Vorzugsweise ist die Strahlenquelle an dem Druckkopf so angebracht, dass die Strahlenquelle um den Druckkopf herum bewegt werden kann.

Vorzugsweise ist die Strahlenquelle auf einer runden Bahn hin- und her bewegbar, so dass der Strahl fortwährend auf den Bereich gerichtet werden kann.

Die Fertigungsmaschine ist insbesondere als ein 3D-Drucker, vorzugsweise als 3D-Drucker für das Fused-Deposition-Modeling Verfahren ausgebildet. Die Fertigungsmaschine weist einen Druckkopf, eine Strahlenquelle, eine Temperatur-Regeleinrichtung und optional eine Geschwindigkeits-Regeleinrichtung auf, wobei der Druckkopf zum Auftrag eines Werkstoffes auf eine Oberfläche ausgebildet ist, wobei die Strahlenquelle zur Erwärmung eines Bereiches der Oberfläche ausgebildet ist, wobei die Fertigungsmaschine zur Durchführung des voranstehend beschriebenen Verfahrens ausgebildet ist.

Die Fertigungsmaschine kann auch eine Kombination einer CNC-Maschine mit einem Aufsatz zum 3D-Druck sein.

Die Fertigungsmaschine umfasst vorzugsweise eine Steuereinrichtung, wobei die Steuereinrichtung eine Steuerung für den jeweiligen Antrieb, eine Steuerung für die Strahlenquelle sowie die Temperatur-Regeleinrichtung aufweist.

Vorzugsweise umfasst die Steuereinrichtung eine Geschwindigkeits-Regeleinrichtung. Die Geschwindigkeits-Regeleinrichtung dient zur Regelung der Geschwindigkeit des Druckkopfes.

Darüber hinaus kann die Fertigungsmaschine einer Recheneinheit zugeordnet sein.

Die Recheneinheit übernimmt vorzugsweise, zumindest zum Teil, die Aufgaben der Steuereinrichtung.

Die Recheneinheit dient vorzugsweise zur Simulation des Abkühlvorgangs der Oberfläche und/oder des Werkstückes.

Vorzugsweise wird die Fertigungsmaschine mit Hilfe des G-Codes gesteuert.

Bei einer weiteren vorteilhaften Ausgestaltung der Erfindung ist die Strahlenquelle als Laser, insbesondere als Festkörperlaser, ausgebildet.

Der Laser ist vorzugsweise als IR-Laser, beispielsweise als Nd:YAG-Laser oder ein sonstiger Dioden-Laser ausgebildet. Die Leistungseinstellung erfolgt vorzugsweise mit Hilfe des Stroms, der für den Dioden-Laser bereitgestellt wird.

Bevorzugt umfasst die Strahlenquelle eine Fokussier-Einrichtung. Die Fokussier-Einrichtung dient zur Einstellung des Fokus der Strahlen, insbesondere der Laserstrahlen, auf den Bereich.

Bei einer weiteren vorteilhaften Ausgestaltung der Erfindung ist die Strahlenquelle an dem Druckkopf positioniert.

Vorzugsweise ist die Strahlenquelle, insbesondere der Laser, beweglich an dem Druckkopf befestigt. Vorzugsweise kann der Laser an einer Seite des Druckkopfes so positioniert und/oder ausgerichtet werden, dass die Strahlenquelle auch bei einer Richtungsänderung des Druckkopfes auf den Bereich gerichtet ist.

Alternativ ist die Strahlenquelle an einer stationären Position befestigt. Zur Ausrichtung des Strahls auf den Bereich dient dann vorteilhaft eine Umlenk-Vorrichtung.

Vorzugsweise werden die Position und/oder die Ausrichtung der Strahlenquelle an dem Druckkopf mit Hilfe der Steuereinrichtung vorgegeben.

Bei einer weiteren vorteilhaften Ausgestaltung der Erfindung ist die Temperatur-Regeleinrichtung, zur Bereitstellung einer maximalen Geschwindigkeit, an die Geschwindigkeits-Regeleinrichtung ausgebildet.

Die Temperatur-Regeleinrichtung, insbesondere mit Hilfe der Simulation des Abkühlvorgangs der Oberfläche, stellt vorzugsweise eine Minimalzeit bereit, die zwischen zweimaligem Anfahren desselben Bereichs oder des benachbarten Bereichs zumindest verstreichen muss, damit die Oberfläche und/oder der Werkstoff wieder erstarren können.

Aus der Minimalzeit kann die maximale Geschwindigkeit ermittelt werden, so dass die Minimalzeit zwischen dem Aufbringen des Werkstoffes auf den gleichen Bereich der Oberfläche oder auf die benachbarten Bereiche der Oberfläche eingehalten ist. Die maximale Geschwindigkeit wird vorzugsweise auch im G-Code hinterlegt.

Das Computerprogrammprodukt ist zur Installation und Durchführung auf einer Recheneinheit ausgebildet, wobei das Computerprogrammprodukt zur Durchführung des hier beschriebenen Verfahrens dient.

Das Computerprogrammprodukt dient vorzugsweise zur Durchführung folgender Schritte:
- Regelung der Leistung der Strahlenquelle;
- Regelung der Geschwindigkeit des Druckkopfes derart, dass der Druckkopf zwischen einem mehrmaligen überschreiten eine Minimalzeit verstreichen lässt;
- Simulation des Abkühlvorgangs der Oberfläche oder des Werkstücks;
- Erstellung und/oder Auswertung des G-Codes.

Das Computerprogramm kann darüber hinaus zur Steuerung der Antriebe, der Strahlenquelle oder weiterer Elemente der Fertigungsmaschine dienen.

Das Computerprogramm kann auf einer zentralen Recheneinheit, einer Steuereinrichtung der Bearbeitungsmaschine und/oder zumindest teilweise dezentral ablaufen.

Im Folgenden wird die Erfindung anhand von Figuren näher beschrieben und erläutert. Die in den Figuren gezeigten Ausführungen sind beispielhaft und einzelne dort gezeigte Merkmale können zu weiteren Ausgestaltungen der Erfindung zusammengesetzt werden.

Es zeigen:
- FIG 1: das Auftragen eines Werkstoffes,
- FIG 2: einen beispielhaften Druckkopf,
- FIG 3: eine beispielhafte Fertigungsmaschine sowie
- FIG 4: eine weitere beispielhafte Fertigungsmaschine.

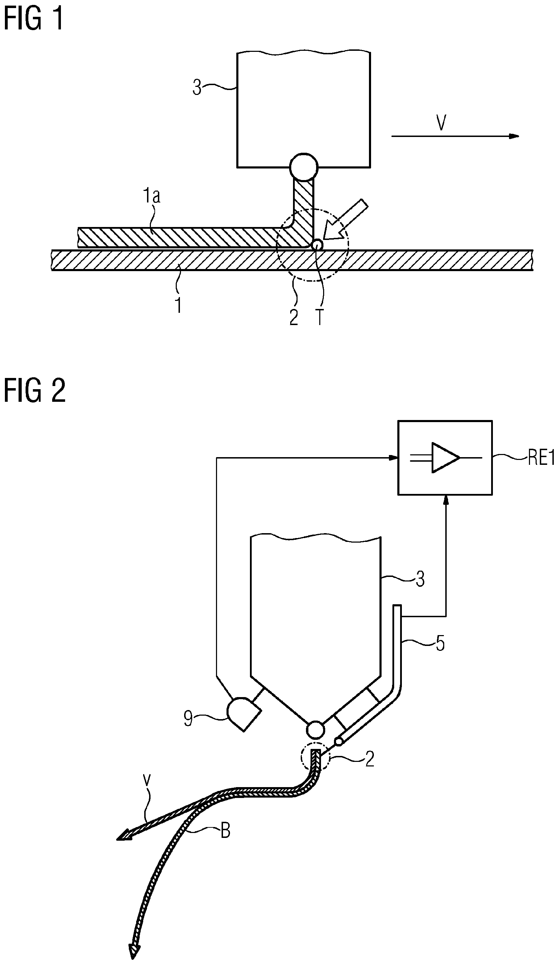

FIG 1 zeigt das Auftragen eines Werkstoffes 1a auf eine Oberfläche 1. Die Oberfläche 1 kann die Oberfläche eines Werkstückes sein. Der Werkstoff 1a wird auf einen Bereich 2 der Oberfläche 1 aufgetragen. Der Bereich 2 wird mit einer Strahlenquelle auf eine Temperatur T erwärmt. Die Temperatur T des Bereiches 2 wird vorzugsweise direkt vor dem Auftragen des Werkstoffes 1a mit der Strahlenquelle 5 (nicht gezeigt) auf zumindest die Auftragungstemperatur erwärmt. Während des Auftragens des Werkstoffes 1a mit Hilfe des Druckkopfes 3 wird der Druckkopf 3 mit einer Geschwindigkeit v relativ zur Oberfläche bewegt.

FIG 2 zeigt einen beispielhaften Druckkopf 3. Der Druckkopf 3 dient zum Auftragen des Werkstoffes 1a auf eine Oberfläche 1 entlang einer Bahn B. Ein Temperatursensor 9 ist an dem Druckkopf 3 befestigt. Der Temperatursensor 9 dient zur Feststellung der Temperatur T, insbesondere in dem Bereich 2 der Oberfläche 1. Weiter ist eine Strahlenquelle 5 an dem Druckkopf 3 befestigt.

Die Strahlenquelle 5 dient zur Bestrahlung des Bereichs 2, so dass die Oberfläche 1 in dem Bereich auf eine Temperatur T erwärmt wird. Vorzugsweise wird die Oberfläche 1 in dem Bereich 2 auf eine Temperatur T erwärmt, die höher als die Auftragungstemperatur ist.

Die Temperatur T der Oberfläche in dem Bereich 2 wird mit dem Temperatursensor bestimmt und einer Temperatur-Regeleinrichtung RE1 bereitgestellt. Die Temperatur-Regeleinrichtung RE1 dient zur Einstellung der Leistung der Strahlenquelle 5. Durch die Leistung der Strahlenquelle 5 kann die Temperatur T der Oberfläche in dem Bereich 2 eingestellt werden. Die Strahlenquelle 5 ist vorzugsweise als Laser, insbesondere als Dioden-Laser, ausgebildet.

Vorzugsweise kann die Strahlenquelle 5 und/oder der Temperatursensor 9 entlang einer Mantelfläche des Druckkopfes 3 bewegt werden. Durch die Möglichkeit der Bewegung der Strahlenquelle 5 kann sichergestellt werden, dass fortwährend der Bereich 2 der Oberfläche mit Strahlen, ausgehend von der Strahlenquelle 5, erwärmt wird.

Mit Hilfe der Temperatur-Regeleinrichtung RE1 kann sichergestellt werden, dass die Temperatur T der Oberfläche in dem Bereich 2 nicht über eine Maximaltemperatur steigt.

Der Druckkopf wird mit einer Geschwindigkeit v auf der Bahn B beabstandet zur Oberfläche 1 bewegt. Ein vorteilhafter Abstand der Unterseite des Druckkopfes 3 und der Oberfläche ist 0,5 Millimeter bis 2 Millimeter.

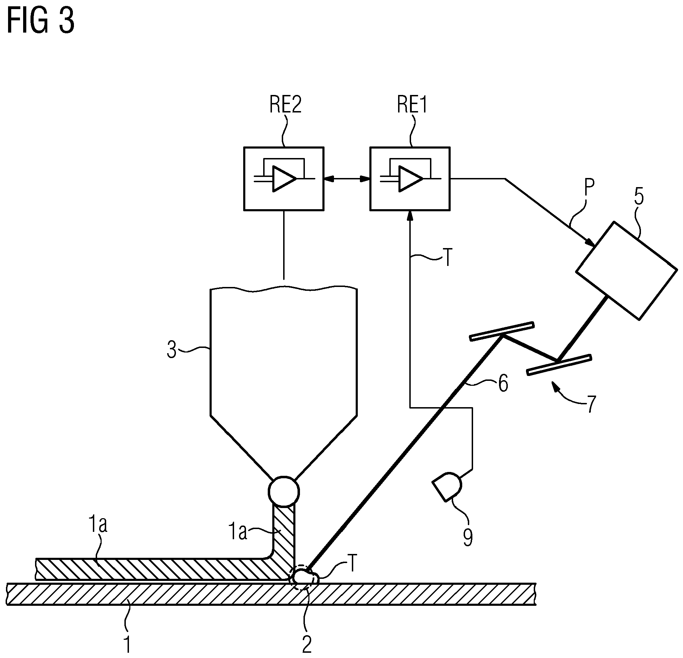

FIG 3 zeigt eine beispielhafte Fertigungsmaschine. Die hier gezeigte Fertigungsmaschine umfasst einen Druckkopf 3, einen Temperatursensor 9, eine Strahlenquelle 5, eine Temperatur-Regeleinrichtung RE1 sowie eine Geschwindigkeits-Regeleinrichtung RE2. Der Druckkopf 3 wird vorzugsweise über die Oberfläche 1 mit einer Geschwindigkeit v entlang einer Bahn B bewegt. Der Druckkopf 3 dient zum Auftragen eines Werkstoffes 1a in dem Bereich 2 der Oberfläche 1. Dabei wird der Druckkopf 3 entlang der Bahn B mit einer Geschwindigkeit v bewegt. Die Strahlenquelle 5 ist an einem festen Ort positioniert. Der Strahl 6 wird von einer Umlenk-Vorrichtung 7 fortwährend auf den Bereich 2 ausgerichtet.

Die Temperatur-Regeleinrichtung RE1 dient zur Einstellung der Leistung P der Strahlenquelle 5. Die Temperatur T wird mit Hilfe des Temperatursensors 9 als Ist-Wert der Temperatur-Regeleinrichtung RE 1 bereitgestellt. Vorzugsweise wird der Temperatursensor 9 auf den Bereich 2 hin ausgerichtet.

Die Temperatur-Regeleinrichtung 1 regelt die Temperatur der Oberfläche 1 unter Berücksichtigung der Geschwindigkeit v des Druckkopfes. Die Geschwindigkeit v des Druckkopfes wird mit Hilfe der Geschwindigkeits-Regeleinrichtung RE2 geregelt und vorzugsweise auch an die Temperatur-Regeleinrichtung RE1 bereitgestellt.

Umgekehrt wirkt vorteilhaft die Temperatur-Regeleinrichtung RE1 auch auf die Geschwindigkeits-Regeleinrichtung für den Druckkopf 3 dergestalt, dass die Temperatur-Regeleinrichtung RE1 der Geschwindigkeits-Regeleinrichtung eine Minimalzeit bereitstellt. Die Minimalzeit gibt vorzugsweise an, wie viel Zeit zumindest vergehen muss, bis der Bereich und/oder auch eine Umgebung des Bereiches, wieder abgekühlt ist. Anhand der Minimalzeit kann eine maximale Geschwindigkeit v entlang der vorgegebenen Bahn ermittelt werden.

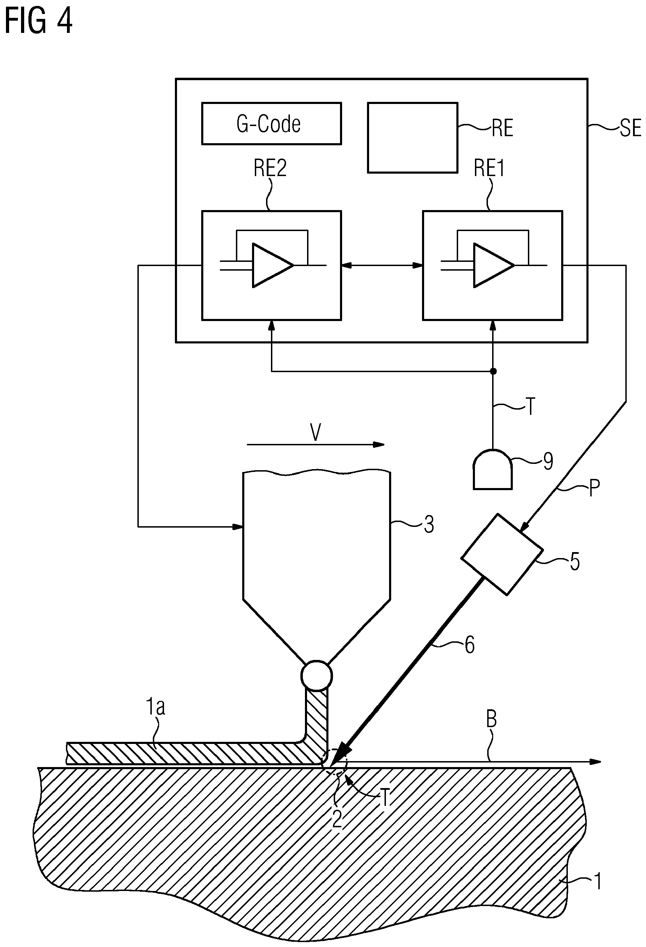

FIG 4 zeigt eine weitere beispielhafte Fertigungsmaschine. Die Fertigungsmaschine ist analog zur der Fertigungsmaschine gemäß FIG 3 aufgebaut. Die hier gezeigte Fertigungsmaschine umfasst eine Steuereinrichtung SE. Die Steuereinrichtung SE umfasst die Geschwindigkeits-Regeleinrichtung RE2, die Temperatur-Regeleinrichtung RE1 sowie eine Recheneinheit RE.

Die Steuereinrichtung SE selbst kann durch eine Recheneinrichtung ausgebildet sein.

Die Steuereinrichtung umfasst darüber hinaus den G-Code. Der G-Code umfasst die Bahn B für den Druckkopf 3. Darüber kann der G-Code Soll-Werte für die Geschwindigkeit v, die Temperatur T der Oberfläche in dem jeweiligen Bereich 2, umfassen.

Die Recheneinheit RE dient vorzugsweise zur Simulation des Abkühlvorgangs der Oberfläche 1. Die Recheneinheit stellt gemäß der Simulation vorzugsweise Soll-Werte für die Geschwindigkeit v und die Leistung P an die jeweilige Regeneinrichtung RE1, RE2 bereit.

Zusammenfassend betrifft die Erfindung ein Betriebsverfahren für eine Fertigungsmaschine sowie eine Fertigungsmaschine, insbesondere einen 3D-Drucker. Während des Betriebsverfahrens erfolgt vorzugsweise ein Erwärmen eines Bereiches 2 der Oberfläche 1 vor dem Auftragen eines Werkstoffes 1a. Das Erwärmen der Oberfläche 1 erfolgt mit Hilfe einer Strahlenquelle 5. Zur Bestimmung der Temperatur T der Oberfläche 2 dient ein Temperatursensor 9. Der Temperatursensor 9 stellt die Temperatur T an eine Temperatur-Regeleinrichtung RE1 bereit, wobei die Temperatur-Regeleinrichtung RE1 die Leistung P der Strahlenquelle 5, und damit die Temperatur T, regelt. Vorzugsweise wird der Bereich 2 lokal zum Schmelzen gebracht, so dass der Werkstoff 1a sich besser mit der Oberfläche 1 verbindet.

## Patentansprüche

1. Betriebsverfahren für eine Fertigungsmaschine, insbesondere für einen 3D-Drucker, wobei die Fertigungsmaschine einen Druckkopf (3), eine Strahlenquelle (5), insbesondere als Laser ausgebildet, einen Temperatursensor (9) und eine Temperatur-Regeleinrichtung (RE1) aufweist, umfassend die folgenden Schritte:
- Bewegung des Druckkopfes (3) entlang einer vorgebbaren Bahn (B) oberhalb einer Oberfläche (1);
- Auftragen des Werkstoffes (1) auf die Oberfläche (1a) in den Bereich (2) mit Hilfe des Druckkopfes (3);
- geregeltes Erwärmen eines Bereiches (2) mit Hilfe der Strahlenquelle (5) auf die Auftragungstemperatur (T), wobei der jeweilige Bereich (2) entlang der Bahn (B) angeordnet ist;
- Bestimmung der Temperatur (T) der Oberfläche mit Hilfe des Temperatursensors (9), wobei der Temperatursensor (9) die Temperatur (T) der Oberfläche des Bereiches (2) an die Temperatur-Regeleinrichtung (RE1) bereitstellt;
- Regelung der Leistung (P) der Strahlenquelle (5) mit Hilfe der Temperatur-Regeleinrichtung (RE1) derart, dass die Oberfläche in dem Bereich (2) vor einem Aufbringen des Werkstoffes (1a) auf die Auftragungstemperatur (T) mittels der Strahlenquelle (5) erwärmt wird.

2. Betriebsverfahren nach Anspruch 1, wobei die Strahlenquelle (5), die Oberfläche (1) und/oder der Druckkopf (3) derart relativ zueinander ausgerichtet werden, so dass die Strahlenquelle (5) während des Erwärmens der Oberfläche (1) auf den Bereich (2) gerichtet wird.

3. Betriebsverfahren nach einem der Ansprüche 1 oder 2, wobei die Bearbeitungsmaschine mit Hilfe eines G-Codes gesteuert wird, wobei der G-Code eine Geschwindigkeit (v) des Druckkopfes (3) relativ zur Oberfläche (1), die Temperatur (T) und/oder die Bahn (B) umfasst.

4. Betriebsverfahren nach einem der vorangehenden Ansprüche, wobei die Temperatur-Regeleinrichtung (RE1) die Leistung der Strahlenquelle (5) derart regelt, dass die Temperatur der Oberfläche eine Maximaltemperatur nicht überschreitet.

5. Betriebsverfahren nach einem der vorangehenden Ansprüche, wobei die Bearbeitungsmaschine eine Geschwindigkeits-Regeleinrichtung (RE2) umfasst und die Geschwindigkeit (v) des Druckkopfes (3) mit Hilfe der Geschwindigkeits-Regeleinrichtung (RE2) derart geregelt wird, dass die Oberfläche (1) in dem Bereich (2), bei einem wiederholten Auftragen des Werkstoffes (la), wieder unterhalb der Schmelztemperatur abgekühlt ist.

6. Betriebsverfahren nach Anspruch 5, wobei anhand einer Simulation eines Abkühlvorgangs der Oberfläche (1) eine minimale Zeit bereitgestellt wird, wobei der Werkstoff in Schichten aufgetragen wird, wobei anhand der minimalen Zeit eine maximale Geschwindigkeit (v) für den Druckkopf (3) bereitgestellt wird, so dass ein wiederholtes Erwärmen des Bereiches (2) lediglich bis zu einer Tiefe einer Schicht des Werkstoffes (1a), insbesondere 100 Mikrometer, über die Auftragungstemperatur erfolgt.

7. Betriebsverfahren nach einem der vorangehenden Ansprüche, wobei die Oberfläche (1), die Strahlenquelle (5) und/oder der Druckkopf (3) so gedreht werden, dass die Strahlenquelle (5) den Bereich (2) jeweils vor dem Auftragen des Werkstoffs (1a) erwärmen kann.

8. Fertigungsmaschine, insbesondere ein 3D-Drucker, vorzugsweise ein 3D-Drucker für das Fused-Deposition-Modeling-Verfahren, aufweisend einen Druckkopf (3), eine Strahlenquelle (5), einen Temperatursensor (9) eine Temperatur-Regeleinrichtung (RE1) und optional eine Geschwindigkeits-Regeleinrichtung (RE2), wobei der Druckkopf zum Auftrag eines Werkstoffes (1a) auf eine Oberfläche (1) ausgebildet ist, wobei die Strahlenquelle zur Erwärmung eines Bereiches (2) der Oberfläche (1) ausgebildet ist, wobei die Fertigungsmaschine zur Durchführung eines Verfahrens gemäß einem der vorangehenden Ansprüche vorgesehen ist.

9. Fertigungsmaschine nach Anspruch 8, wobei die Strahlenquelle (5) als Laser, insbesondere als Festkörperlaser, ausgebildet ist.

10. Fertigungsmaschine nach Anspruch 8 oder 9, wobei die Strahlenquelle (5) an dem Druckkopf (3) positioniert ist.

11. Fertigungsmaschine nach einem der Ansprüche 8 bis 10, wobei die Temperatur-Regeleinrichtung (RE1) zur Bereitstellung einer maximalen Geschwindigkeit (v) an die Geschwindigkeits-Regeleinrichtung (RE2) ausgebildet ist.

12. Computerprogrammprodukt zur Installation und Durchführung auf einer Recheneinheit, wobei das Computerprogrammprodukt zur Durchführung eines Verfahrens gemäß einem der Ansprüche 1 bis 7 ausgebildet ist.
